# EUROPEAN PATENT APPLICATION

(11) **EP 4 400 243 A1**
(43) Date of publication of application: **17.07.2024**
(21) Application number: 23382012.5
(22) Date of filing: 11.01.2023
(51) Int. Cl.: B23K 9/04, B23K 9/095, B33Y 10/00, B33Y 50/02, B33Y 80/00

(54) **METHOD OF ADDITIVE MANUFACTURING FOR MANUFACTURING MOLDS AN ADDITIVE MANUFACTURING SYSTEM FOR MANUFACTURING MOLDS**

(71) Applicant: Fundación AITIIP, 50720 Zaragoza (ES)
(72) Inventor: MONZÓN CATALÁN, Iván, E-50720 Zaragoza (ES); LAGUÍA PÉREZ, Alberto, E-50720 Zaragoza (ES); MARQUÉS PAOLA, Alejandro, E-50720 Zaragoza (ES); GONZALVO BAS, Berta, E-50720 Zaragoza (ES); DIESTE MARCIAL, José Antonio, E-50720 Zaragoza (ES); GRACIA ARANEGA, Pascual, E-50720 Zaragoza (ES)
(74) Representative: ABG Intellectual Property Law, S.L.

(57) **Abstract**

The present invention is related to the field of additive manufacturing and, in particular, to wire arc additive manufacturing methods and systems for optimized metal molds. The invention is characterized by the use of a computational model that allows the definition of slices that serve as a reference for the addition or not of layers of material according to a strategy that prevents accidental contact of the arc tool with the manufactured piece, and serve to maintain some of the process parameters (stick out) in the optimized value range. According to specific aspects the method and system include strategies for defining arc trajectories to permit the correct growth without deformation of the manufactured part.

## Description

### FIELD OF THE INVENTION

The present invention is related to the field of additive manufacturing and, in particular, to wire arc additive manufacturing methods and systems for optimized metal molds.

The invention is characterized by the use of a computational model that allows the definition of slices that serve as a reference for the addition or not of layers of material according to a strategy that prevents accidental contact of the arc tool with the manufactured piece, and serve to maintain some of the process parameters (stick out) in the optimized value range.

According to specific aspects the method and system include strategies for defining arc trajectories to permit the correct growth without deformation of the manufactured part.

### PRIOR ART

Manufacturing molding processes are widely employed for producing plastic parts or components using a mold cavity for the molten material, like glass or plastics and most commonly, thermoplastic polymers. Different types of manufacturing molding processes, such as injection molding, blow molding, RTM, lay-up, compression molding, organosheet compression use a mold cavity created within a mold.

Injection machines that perform manufacturing molding processes use injection molds containing cavities that form the parts of the resulting plastic component. Melted plastic is injected into the mold, filling said cavities. The mold is continuously cooled or heated, and the parts are ejected by pins.

The mold is a key point of a manufacturing molding process. Any reference to "mold" or "injection mold" in no way limiting, as all forms or parts of a mold are contemplated, for example a mold or a counter-mold, or a fixed mold plate and a movable molt plate that close together.

Steel is the most frequently used material for the construction of a mold or a part of it. However, other materials, such as aluminum, nickel-chromium, iron-nickel or beryllium-copper alloys are also used for some mold makers mostly for prototypes and test runs. Aluminum is lighter than steel and has a better thermal conductivity than steel. The choice of one or another material is generally made based on the size of the part, the volume of parts to be manufactured and the desired quality. The type of mold material affects the product quality a lot (e.g. thermal conductivity, weight, etc.). A combination of steel and aluminum, wherein each material is used for different parts of the mold is also possible.

In reference to the steel, different types of steel material (e.g. mild steel) may be used, depending on the particular use or needs (e.g. a mold that works well in the shorter term or a longer-lasting mold with lower long term cost). On the other hand, different grades of steel material may be used.

In general, a mold is constantly receiving heat from the melted material and therefore need to be constantly cooled. It is well known to provide the molds with an inner cooling system to either cool or heat the mold or a part of said mold depending on the specific step or need of the manufacturing process. In this case, the thermal inertial is not very relevant since the heat evacuated is the heat that the mold receives from the melted material.

According to other applications with no melted material, a thermo-deformable sheet or preform is deformed by the mold at high temperature and then is cooled down before opening the mold in order to correctly set the final shape. In these cases, a mold needs to be heated before starting the manufacturing process and cooled once the process has finished. Since the mold need to be heated and cooled the time invested in a manufacturing cycle depends on the thermal inertia of the mold and therefore has to be as low as possible.

A correct design of the injection mold cooling system is, therefore, crucial since the cooling time takes more than half of injection molding cycle. Poor design of cooling system will extend molding time, increase production cost, and the injection mold temperature has great influence to the mold shrinkage, dimensional stability, deformation, internal stress and surface quality. Therefore, a well-designed cooling system can shorten the molding time and improve the productivity magnificently.

A conventional cooling inner system comprises a cooling circuit that uses a fluid (also called coolant), such as water or oil, that is selectively transmitted and passes through a plurality of cooling channels created in specific parts inside the mold for this purpose.

Said plurality of inner cooling channels are constituted as hollow spaces that are formed in specific parts of the interior of the mold body according to a determined direction depending on the geometry of the mold. The design and formation of the plurality of cooling conduits or channels inside the mold come with great challenges. There are several design aspects of cooling channels that can help achieve good channel design. These include: (a) the number of cooling channels should be as many as possible, (b) the diameter of the inner cooling channels should be as large as possible, (c) the cooling channels should be as close as possible to the thickest part of the mold cavity and (d) the cooling channels should be closely follow the specific geometry of the external mold parts to ensure a uniform thermal transfer to avoid deformation of the resulting molded part or a non-homogeneous temperature field in the mold.

One or more external mold parts are likely to have one or more curved surfaces. In those cases, as indicated in the previous paragraph, it is desirable that each cooling conduit or channel closely follows the same specific curved trajectory than the external mold part that is placed above the inner cooling conduit or channel.

Metal molds can be produced by different types of manufacturing processes. They have traditionally been produced by casting of molten metal to generate a first part that is subsequently machined. Typical external machining operations are milling, mainly by means of numerical control machines with several degrees of freedom that allow the generation of complex shapes. For the machining of internal cavities such as cooling ducts or channel, the most common operation is drilling, imposing ducts of straight configuration. When straight ducts are to be adapted to a certain shape, one of the usual ways is to machine straight sections that are connected. A specific connection between straight sections are external chambers, for example by open chambers that allow access to the drilling tool and then closed, for example by plates.

However, the formation of the plurality of cooling channels of the metal molds or part of said molds obtained by these conventional manufacturing processes is difficult when the inner cooling channels should adapt to complex paths with one or more curvatures. The precision of design and formation of each cooling channel according to a predetermined path including one or more curvatures is critical to ensure a correct heating and cooling of the mold.

On the other hand, due to the weight of the metal, metal molds or part of such molds obtained by these conventional manufacturing processes also aim to reduce the overall weight of the mold by providing internal openings in certain parts of the mold which are devoid of material.

More recently, welding technologies for manufacturing metal parts or components, such as gas-metal arc welding (GMAW), tungsten-inert gas welding (TIG) or stick welding have been employed to produce "built-up" metal parts, pieces or components. However, metal parts, pieces or components later require significant machining to produce usable, useful parts. Instead, a relatively new manufacturing technology based on welding to produce useful metal geometries through Wire Arc Additive Manufacturing (WAAM) is gaining an increasing market share, due to their significant benefits.

WAAM is an advanced digital manufacturing process that melts a metal wire (wire feedstock) using a standard electric or plasma arc equipment as the heat source by depositing layers of metal on top of each other under the control of a program or software according to a 3D digital model, until a desired 3D metal part, piece, component or shape is created. The shape is built upon a substrate material (a base plate) that the part can be cut from once finished. The wire, when melted, is deposited in the form of a cord or bead on the substrate. As the beads stick together, they create a layer of metal material. The process is then repeated, layer-by-layer until the metal part is completed. In WAAM, components are typically deposited vertically layer-by-layer.

WAAM can generally work with a wide range of metals, provided they are in wire form. This list includes stainless steel, nickel-based alloys, titanium alloys and aluminum alloys. Any metal that can be welded can also be used with WAAM.

It would be highly desirable to find a method and system that is capable to produce an optimized metal mold suitable for being used e.g. in injection molding, blow molding, RTM, lay-up, compression molding, organosheet compression process, wherein the formed metal molds can have very complex curved external part/s (protruding or recessed parts) with an optimized design of the geometry and location of the inner cooling channels and also an optimized design of the geometry and location of other internal openings for reducing the quantity of metal, so the weight of the mold.

It would be also highly desirable to find a method and system that is capable to produce an optimized metal mold having a thermal inertia reduction and raw material consumption. Furthermore, the manufactured mold by the method and system must have no imperfections and a sufficient amount of material so that after machining the generated surface of the mold does not show voids or defects even if the deposition is by means of a bead generated by melting material that hardly generates a predictable shape.

### DESCRIPTION OF THE INVENTION

The present invention provides a solution for the above mentioned issues by a method of additive manufacturing for manufacturing molds according to independent claim 1, an additive manufacturing system for manufacturing molds according to claim 13 and a computer program product according to independent claim 15. In dependent claims, preferred embodiments of the invention are defined.

In a first inventive aspect, the present invention provides a method of additive manufacturing for manufacturing molds or parts of said molds, by means of:
- *a substrate intended for supporting the generated mold or part of said mold;*
- *a wire arc device adapted for depositing metal cord according to a predetermined path over a surface in a direction perpendicular to the substrate and adapted to be movable in a plane parallel to the substrate forming a metal layer on top of each other;*
- *a sensor adapted to measure a distance between the wire arc device and a surface in a perpendicular direction to the substrate; and*
- *a computer system in communication with the wire arc device and the sensor;*
*the method comprising the steps:*
*1. generating by the computer system a 3D numerical model of a mold or part of said mold;*
*2. segmenting by the computer system the 3D numerical model into a plurality of stacked slices of a predetermined thickness according to a predetermined direction;*
*3. iteratively, departing from the first slice until the last slice of the 3D numerical model, carrying out on each of the slices by the computer system, according to a sequential order, the following sub-steps:*
   *a) selecting the slice of the 3D numerical model to be used for determining the path of the wire arc device to form a determined metal layer;*
   *b) determining by the computer system, for the determined slice, a path intended to represent a trajectory of a metal cord to be deposited in respect to the slice; and*
   *c) commanding the wire arc device by the computer system to form a determined metal layer by depositing a metal cord on top of the previously formed metal layer, or on the substrate if it is the first metal layer, following a trajectory according to the path generated by the computer system for the slice to be used;*

- *wherein in step 3 the computer system further carries out a further action of checking for the selected slice the formed metal layers in comparison to the slices of the 3D numerical model, comprising the following sub-steps:*
   *before step c is executed, receiving from the sensor at least one measurement value of the distance and determining a representative value of the height of the formed metal layers;*
   *if the representative value is higher than the summation of the thicknesses of the previous slices of the 3D numerical model plus the thickness of the selected slice to be used then at least c) of the currently checked slice is not executed and the computer system selects the next slice.*

The following terminology is used along the whole document to describe features of the invention:
- The term "substrate" should be understood as it can be any type of support or plate intended for supporting the generated mold or the generated mold preform or part of any of them. Preferably, the substrate is a metallic substrate, for example a stainless steel. Also preferably, the substrate is flat and it is disposed in a horizontal plane. In the case where the substrate is flat and it is disposed in a horizontal plane, the direction in which the slices are generated is the direction identified during manufacture as vertical. Once the shape is built upon a substrate the substrate can be cut.
   The term "generated mold or part of said mold" should be understood in a broadly way, including a wide range of a mold or injection mold or part of said mold, e.g.: a preform of the mold that is next machined to finally obtain the final mold, a mold or a counter-mold, a fixed mold plate and a movable molt plate that close together or even a coating of a mold; wherein the mold or part of said mold is made of a material such as metal, for example steel, aluminum, nickel-chromium, iron-nickel or beryllium-copper alloys; and wherein the mold is suitable for being used in injection molding, blow molding, RTM, lay-up, compression molding, organosheet compression process or a similar manufacturing process. When the term "material" is used, it is understood as the deposition material with which the growth of the manufactured piece is obtained. The preferred material is metal or metal alloys, although the use of other resistant materials is also possible. The resulting mold or mold preform or mold part according to specific embodiments have curved external part/s or surface/s have inner cooling channels or other apertures, even for cases where the curvatures of the curved external part/s and so the curved inner cooling channels or other apertures are very complex.
- The term "steel" in no way limiting, as there are thousands of grades to choose from for each specific product. The type of material and geometry determine the choice of steel grade.
- The term "wire arc device" should be understood as it can be any wire arc device adapted for depositing a weld cord or also known as weld bead (in most cases departing from a metal wire or also known as wire feedstock) according to a predetermined path over a surface.
- In the context of the present invention, the wire arc device is at least adapted to be movable in a plane parallel to the substrate forming a plurality of cords extended along a path distributed over a certain area. Since the weld bead has a certain width, the path establishes a band that covers a portion of the area. The aim of the use of a wire arc device is at least to deposit a new layer of material, preferably metal, without leaving cavities or defects in said layer. The weld bead can cover the entire area by making use of sinuous paths or paths that at one or more points intersect. This is the case of paths that form a grid, for example triangular, by superimposing lines extending in various directions.
- Further, it should be understood that the heat source used to melt the metal cord or metal wire (wire feedstock) may be a standard electric or plasma arc equipment. The metal wire, when melted by the heat source, is deposited in the form of a cord or a bead on the substrate or the piece. As the beads stick together, they create a layer of metal material. The weld bead not only has a certain width but, according to its cross-section, shows a curved upper surface of greater height in the central part. For this reason, once the material has been deposited by means of the wire arc device following the predetermined path, the new layer of material shows strong variations in height over the original surface, either because of the curved shape of the weld bead or because of the places where there is crossing and overlapping of weld beads or for both reasons. The growth of the part is carried out by generating a plurality of layers of material following the same strategy.

In places where a layer has irregularities in height, according to the direction of growth by deposition, the deposition of a new layer can increase these irregularities. The set of steps and features of the method allows a controlled growth of the mold even in these circumstances.
- The term "sensor" should be understood as it can be any sensor adapted to measure the distance between the wire arc device and a surface in a perpendicular direction to the substrate. When we refer to "the distance between the wire arc device and a surface in a perpendicular direction to the substrate" the reference point of the wire arc device is preferably where the material is supplied. However, the sensor can be in a different location from the point of deposition of the material but always in a fixed location with respect to the wire arc device. This makes the positional relationship between the sensor and the deposition point known. With the position relationship between the sensor and the deposition point it is possible to correct the signal directly obtained by the sensor and reference it to the desired point, in particular to the material deposition point.

In analytic geometry, the distance from a point to a plane is the shortest distance between the point and any other point in the plane. This distance corresponds to the length of the segment perpendicular to the plane that goes from the point to the plane. A possible type of sensor may be a laser sensor.
- Any reference to "part", "piece", "component" or "shape" in no way limiting, as all forms of parts are contemplated, including metal pieces or components or part of said pieces or components, such as coatings.

The present invention provides a method for manufacturing optimized metal molds or parts of said molds using Weld Arc Additive Manufacturing (WAAM), wherein the resulting formed metal mold or parts of said molds is suitable for being used, e.g., in injection molding, blow molding, RTM, lay-up, compression molding, organosheet compression, is an improvement upon existing methods of additive manufacturing using weld materials. This method allows has the advantages thatthe raw mould formed requires only a small amount of finishing, it greatly simplifies the processing procedure, avoids special tools, shortens the product manufacturing cycle, and enables customised production of a mold with a complex shape.

On the other hand, advantageously, the resulting WAAM formed metal mold or part of said mold produced through the disclosed method is capable of manufacturing complex shaped molds having curved external part/s or surface/s (protruding and/or recessed parts), even for cases where the curvatures of said curved external part/s is very pronounced.

Furthermore, advantageously, the resulting WAAM optimized metal mold or part of said mold produced through the disclosed method permit manufacturing complex shaped molds having curved external part/s or surface/s and including inner apertures, inner conduits or inner cooling channels with the same curvature as the curved external part/s with a high degree of precision and accuracy according to a predetermined curvature requirements. In particular, the plurality of inner cooling channels are constituted as hollow spaces, in specific parts of the interior of the mold body depending on the geometry of the shape of the mold. In particular, the present method makes it possible to create these cooling channels in a close position to the thickest part of the mold cavity and closely following the specific geometry of the external mold parts (even if the external mold parts are curved) to ensure uniform the thermal transfer to avoid deformation of the resulting molded part. A well-designed inner cooling channels for the coolant in the mold according to a predetermined path ensures a correct heating and cooling of the mold, which shorten the molding time and improve the productivity magnificently of the molding process. Moreover, the method and system of the present invention allow to form an optimized mold having a good design of the geometry and location of one or more internal openings or apertures. The provision of these one or more internal openings or apertures advantageously reduces the amount of metal in the mold in specific parts, thereby consequently reducing the overall weight of the mold.

The specific strategy according to claim 1 of establishing the metal deposition paths combined by the layer selection criteria depending on the result that is being measured on the generated part allows the use of a metal deposition by beads or cords that, traditionally, does not offer control over the thickness or shape adopted on a surface that is increasingly irregular. On the contrary, it has been observed that as a result, even though the generated metal part according to method claim 1 has roughness, the overlapping of beads does not generate cavities due to inadequate deposition. In addition, the claimed method guarantees the non-interference of the arc generating head with the generated metal part. This is very important since a simple contact of the head with the generated metal part would give rise to a very high intensity discharge that would generate the undesired welding of the head itself, destroying it at least in part.

In respect to the predetermined path, according to an embodiment, it is planned according to the specific mold to be manufactured. According to an embodiment, the predetermined path of the wire arc device comprises one or a plurality of lines following the contour or part of it and a set of lines filling the inner area surrounded by the contour. The set of lines filling the inner area, according to an embodiment, are parallel lines equally spaced. According to a further embodiment, the set of lines filling the inner area comprises a first set of parallel lines equally spaced and a second set of parallel lines equally spaced and rotated a predetermined angle in respect to the first set of lines. Examples of angles are 30º, 45º, or 90. According to a further embodiment, the set of lines filling the inner area are parallel lines equally spaces that are rotates in respect to the lines of the part of the path corresponding to the inner area of the former slice.

Preferably, step 2 of the method consists of *segmenting by the computer system the 3D numerical model into a plurality of stacked slices of a predetermined thickness according to a predetermined direction, wherein said predetermined direction in which the slices are generated is perpendicular to the substrate.*

Once the 3D numerical model of a mold or part of said mold has been generated, a segmentation process generates a plurality of stacked slices of a predetermined thickness wherein the stacking direction is preferably the vertical direction to a base. Thus, if the substrate extends along a horizontal plane, the direction in which the slices are generated in the 3D numerical model is the vertical direction wherein a base of the 3D numerical model uses as a coordinate reference system the substrate position and orientation. This base of the 3D numerical model is the base representing the substrate on which the mold or piece will be manufactured. The vertical direction in respect to the base in the 3D numerical model is the same that that the vertical direction in respect to the substrate during real manufacturing of the mold. That is, the numerical model is a representation of the mold to be manufactured and the base is a representation in the 3D numerical model of the substrate.

The set of slices having a predetermined thickness are references that will be used when determining if a new layer is added to the piece being manufactured and when determining the path that the wire arc device must follow when depositing a new layer. The shape of the perimeter of each layer may vary from one layer to another and is delimited by the mold model when segmented.

The addition of layers using the wire arc device is done by applying an iterative method that runs through the set of slices of the 3D numerical model. In the execution of the method, there will be slices that do not result in a new layer deposited by the wire arc device or, there will be slices that result in the deposition of one or more layers.

The first reference slice is the first slice of the 3D numerical model, the one closest to the base and which should result in one or more layers of material on the substrate. Starting with this first slice, one slice is taken sequentially as a reference slice. From a reference slice, the path that the wire arc device will follow is established according to the shape of the slice, mainly the perimeter shape. While the segmentation of a body delimited by a curved surface by stacked slices gives rise to perimeter limits according to a curved perimeter band, the determination of the path of the wire arc device is established for a reference plane, for example either a middle plane of the slice or one of the base planes of the slice, and the perimeter limit is the intersection of the reference plane with the perimeter surface of the slice.

Once the path of the wire arc device is established, the method acts on the wire arc device so that it deposits a weld bead or cord following the path previously established on the slice of the model and deposited on the previous layer (or the substrate if it is the first layer).

Once this new layer has been deposited, a measurement of the height reached with the new layer is carried out. Although each point of the upper surface of the layer provides a different measurement due to irregularity, the method establishes a single reference value where, according to a preferred example, this reference value is taken based on a plurality of measurements taken on the surface.

When a new reference slice is selected, a check is carried out: the representative height measured on the top surface of the last layer is compared with the corresponding height in the 3D numerical model resulting from considering the sum of the thicknesses of the new reference slice and all the reference slices that have been previously used.

If the measured height is greater than the height resulting from adding the thicknesses of the slices, the used slices plus the new reference slice, then the method moves on to the next slice without carrying out the layer deposition process. That is, the reference slice becomes the next slice by rechecking if now the height provided by the 3D numerical model by stacking reference slices is greater than the height measured on the part of the piece already measured.

The technical effect of this check is not to allow the piece to grow too much, especially when the height of growth in one or more layers is greater than the thickness of the slices. Otherwise, if the part grows more than expected it could result in accidental contact of the wire arc device and the part being manufactured and this accidental contact causes the wire arc device to weld directly to the part damaging the tool.

Preferably, the distance measurement made by the sensor is taken right at the point of the wire arc device where the metal material is introduced.

In some embodiments, *after receiving from the sensor the measurement of the distance and determining a representative value of the height of the formed metal layers, the method further comprises the step:*
- *before step a), receiving from the sensor a measurement of the distance and determining a representative value of the height of the formed metal layers and, if the representative value of the height is lower than the summation of the thicknesses of the previously used slices then steps b) and c) are executed.*

Once it has been ensured that the height reached with the deposition of a new layer does not grow excessively such as coming into contact with the tool, according to this embodiment an additional check identifies situations in which the last deposited layer has not reached the height corresponding to the sum of the thicknesses of the slices used as reference. In this case the method deposit again a new layer according to steps b) and c).

*In some embodiments of the method, the path, determined by the computer system, generated for at least one slice of the plurality of stacked slices comprises the following regions or portions:*
- *a first portion of path that corresponds to the perimeter of the slice;*
- *a second portion of path that corresponds to inner perimeter*/*s of one or more inner conduits, inner openings or inner cavities sectioned by the slice (if they exists); and*
- *a third portion of path that corresponds to the inner area of the slice.*

According to another embodiment of the method, the predetermined path also comprises a portion extended along the outer perimeter of the layer and the perimeter of any of the openings caused by the inner conduits sectioned by the layer. This possible form of the predetermined path is repeated for layer-by-layer accumulation to complete the production of a certain surface of the mold. This embodiment providing a path extended at least along the outer perimeter of the layer allows to avoid a growth process that has been observed to be anomalous since the addition of successive layers in practice results in the manufactured piece tilting in respect to the direction of growth. It has been observed that increasing the material deposition specifically in the perimeter zone avoids this anomalous behavior.

*In other embodiments of the method, the path, determined by the computer system, generated for at least one slice of the plurality of stacked slices, additionally to the previous three steps, further comprises:*
- *a forth portion of path that corresponds to inner perimeter*/*s of one or more inner cooling ducts or channels sectioned by the slice.*

A similar effect is observed in the inner openings or inner cavities sectioned by the slice. The wire arc device add material but these specific regions close to the inner perimeters show a lower height and adding the second portion of path that corresponds to inner perimeter/s increase the amount of material avoiding deformations of the whole mold parts close to the existence of inner cooling ducts or channels.

*In some embodiments of the method, two sensor measurements are taken:*
- *a first measurement at a location corresponding to the inner area of the slice determining a representative value of the height at said location and,*
- *a second measurement at a location corresponding to a perimeter of the second portion or the third portion or both portions determining a representative value of the height at said location;*
*wherein the step c) is executed over the second portion, the third portion or both portions if the absolute value of the difference between the representative value of the height of the first measurement and the representative value of the height of the second measurement is higher than a predetermined threshold.*

Although it has been observed that the manufactured pieces by layered deposition using a wire arc device give rise to deformations that are compensated by the inclusion of a portion of the perimeter path, this perimeter deposition does not necessarily correspond to a deposition of material in the inner area of the slice.

According to this embodiment, two independent measurements are carried out, one representative of the height reached inside the deposited layer and the other representative of the height reached in the perimeter area. The difference, if it exceeds a predetermined threshold value assesses whether the degree of growth in the perimeter zone and the inner zone is different. In particular, when the growth of the inner zone is greater than the perimeter zone exceeding the predetermined threshold value then a deposition is established only along a path in the third portion; that is, in the perimeter zone causing a compensation effect of the heights obtained in the manufactured piece.

*In some embodiments of the method, the generated third portion of path incorporates a tolerance for avoiding the section reduction or closing of any internal channel with metal cord.*

It has been observed that the deposition of material following a perimetric path, the second portion of the path, generates a narrowing of the ducts that are generated. According to this example embodiment, the deposition path is amended by causing it to enter towards the inner area a certain distance and as a result, the duct is widened.

*In some embodiments of the method, the metal cord is deposited in a direction transversal to the predetermined direction of the path, preferably in a direction perpendicular to the substrate.*

According to this embodiment, the metal cord is deposited in a direction perpendicular to the substrate and therefore, at any change of direction imposed by the path, the deposition angle does not change, and the resulting weld bead is independent of the path. Moreover, under these conditions it is not necessary to modify the deposition orientation and the movements of the wire arc device only correspond to displacement movements without any change of orientation, simplifying the means of action and movement to achieve a deposition following a certain path.

*In an embodiment of the method, determining the representative value of the height from a sensor measurement is being processed by the computer system by:*
- *removing measurement spurious values; or*
- *removing measurements that are not maintained during a predetermined period of time; or*
- *removing both, measurement spurious values and measurements that are not maintained during a predetermined period of time.*

It has been previously described that the surface of a deposited layer in mold formation results irregular and with strong variations in height if measured at different points. When the height sensor carries out a plurality of readings, for example at or along a path, the signal received is a strongly varying signal. According to this example embodiment from this strongly varying signal a single scalar value representative of the height of the entire layer is determined.

In a first option, spurious values are eliminated, thus removing noise due to values that do not necessarily correspond to real height variations. Even if this is not the case, such values are not assessed as representative. The result is a signal that, being variable, has smaller fluctuations.

The further option assesses only values that are maintained for a predetermined period. This means that height values acquired along a path without any change in these values means that a surface area is close to flatness or does not correspond to strong height changes such as the interface between measuring outside the part and inside the part.

A third option combines the application of the first option and the second option. After one or two filters like the ones disclosed the resulting signal is more stable and can be used as a calculation reference for a representative height value.

*A method according to the previous claim, wherein the sensor measurement is being further processed by the computer system by selecting the higher value of the sensor measurements in an entire metal layer ensuring that the wire arc device does not touch the generated mold.*

The measurements used to establish the height reference value can be the directly obtained from the sensor output signal or the signal preprocessed according to any of the examples described above. In this second case, the values are closer to the real values of the height of the mold due to the elimination of unwanted effects such as reading noise or values that correspond to the beginning or end of the part following the measurement projection of the sensor. The use of the maximum value criterion ensures that the tool, the wire arc device, will never make contact with the mold at any time.

Although height is described as the measurement variable, at all times it should be interpreted as meaning that the measurement is the distance between the sensor and the measured object in the direction of growth, although the preferred example uses the vertical direction determined by the action of gravity as the direction of growth.

*Optionally, the method further comprises a final step of machining the external surface of the generated mold or of the part of said mold.* Different types of surface finishes can be applied to the formed mold or part of the mold for aesthetic or functional purposes. Preferably, the machining is milling, e.g. by means of numerical control machines with several degrees of freedom that allow the generation of complex shapes. As an example, the preform manufactured by the method and system has an excess thickness of about 5 mm on all outer surfaces, which is the area that is subsequently machined.

In the case of working surfaces that must fit precisely with other surfaces, such as the surfaces of a mold that come into contact with the surfaces of a counter-mold, the machining operation eliminates all the irregularities inherent to a surface generated by the contribution of a weld bead. Therefore, the 3D numerical model must be oversized in such a way that the volume generated must be delimited by surfaces distanced from the surface generated after the machining operation, distanced outwards from the body of the mold, and with a sufficient distance to ensure that the machining eliminates all irregularities. That is, even the deepest valleys of irregularities are spaced away from the final surface so that the final surface is only the result of the machining operation.

*Also optionally, the method further comprises a final step of polishing the external surface of the generated mold or of the part of said mold. Preferably, the polishing the external surface of the generated mold or of the part of said mold is a subsequent step to the step of machining the external surface of the generated mold or of the part of said mold.*

Surface polishing operations are in fact a fine machining operation. Therefore, the oversized 3D numerical model must take into account the additional reduction of volume caused by polishing the surface. This polishing step is carried out after the step of machining the external surface of the generated mold or of the part of said mold.

In a second inventive aspect, the invention provides *an additive manufacturing system for manufacturing molds, the system comprising:*
- *a substrate intended for supporting the generated mold or part of a mold;*
- *a wire arc device adapted for depositing metal cord according to a predetermined path over a surface in a direction perpendicular to the substrate and adapted to be movable in a plane parallel to the base forming a metal layer on top of each other;*
- *a sensor adapted to measure the distance between the wire arc device and a surface in a perpendicular direction to the substrate; and*
- *a computer system in communication with the wire arc device and the sensor;*
*wherein the computer system is adapted to carry out the steps 1 to 3 of the method* according to the first aspect of the invention.

The second aspect is an additive manufacturing system with the physical elements identified in the method description and where such a system incorporates a computational system that reads environmental variables, in particular the growth height of the layers being incorporated on the substrate by means of the sensor, and also has the ability to act. This performance is mainly to carry out the movements of the wire arc device according to the stages established by the method according to any of the described examples.

In particular, in the first aspect of the invention and the second aspect of the invention, the wire arc device is capable of carrying out movements according to the vertical direction to position itself at a height separated from the substrate sufficient to provide an additional layer of material. This distance to the substrate is the one that increases according to the described criteria and the thicknesses of the slices of the 3D numerical model that are taken as a reference each time a new layer is added.

As additional separation distance (the increment of distance to be moved) taken to separate the wire arc device when a new layer is to be deposited, the thickness of the 3D numerical model is taken as a first reference unless, as a specific example, the computational system receives information of a different distance more appropriate to the layer thickness that is actually generated when the layer is completed. In this case, although the distance taken to separate the wire arc device from the substrate is different from the thickness of the 3D numerical model, the criteria described for maintaining the reference slice or advancing to the next slice remain intact.

Preferably, the base of the system intended for supporting the generated mold or part of a mold is a metallic substrate, such as stainless steel.

*Preferably, the wire arc device is a DED-arc wire device.*

The wire arc device is preferably adapted for depositing a weldable metal cord in wire form, wherein the material may be, for example as: steel, stainless steel, nickel-chromium alloys, nickel-based alloys, titanium alloys and aluminum alloys.

Preferably, the wire arc device is movable in a plane parallel to the base by means of a robotic arm having a freedom of movement, which is connected to the wire arc device.

Once the wire arc device has increased the distance from the substrate, a new layer is applied. This layer, according to this example of realization is with movements in a plane parallel to the substrate according to the predetermined path maintaining the distance to the substrate while depositing the same layer.

In a particular embodiment of the system, the computer system is further adapted to carry out any specific example of method previously disclosed.

In a third inventive aspect, the invention provides a computer program product comprising instructions which, when the program is executed by a computer system, cause the computer system to carry out the steps 1 to 3 of the method according to the first aspect of the invention and optionally any of the additional disclosed steps of specific embodiments of the method of the first inventive aspect.

Such a computer program product provides the required software and is adapted to carry out the method of the first aspect of the invention when is executed by the computer system of the second aspect of the invention.

In a fourth inventive aspect, the invention provides a computer-readable data carrier having stored thereon the computer program of the third inventive aspect.

Advantageously, this provides a functional system for the reproduction of the sequential steps (path of the device) and/or milestones (any relevant aspect during the manufacturing process), thus achieving the required results without the presence of a user or operator.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
Figure 1 This figure shows a first example of a numerical model, generated by a computer system, representing an object to be manufactured according to the method and system of additive manufacturing of the present invention.
Figure 2 This figure shows a cross-section of the numerical model of Figure 1 by the cutting plane "P".
Figure 3 This figure shows the same view of the numerical model as Figure 2, but also including the partitioning of the numerical model into a plurality of stacked slices.
Figure 4 This figure shows a view of a real situation of the system of the invention, wherein the material is being deposited on a real substrate. It also shows on a dotted line a cross-section of the numerical model being used for manufacturing. In particular, Figure 4 shows a situation in which six different layers have been deposited and the input of the last layer (i.e. the top layer) has not reached the height of the numerical model slide.
Figure 5 This figure shows the same view of the system as Figure 4, but in a different situation wherein five different layers are deposited and the last layer (i.e. the top layer) has exceeded the numerical model slide.
Figure 6 This figure shows a top view of a certain deposited layer.
Figure 7 This figure shows the same top view of Figure 6 of a certain deposited layer, but in another example including three separate openings.
Figure 8 This figure shows a top view of a certain deposited layer of a second example of a manufactured mold manufactured by the method of additive manufacturing of the invention. This second example comprises two lateral through openings and also four oil channels.
Figure 9 This figure shows a perspective view of a third example of a mold which is manufactured by the method and system of additive manufacturing of the invention.
Figure 10 This figure shows a perspective view of a forth example of a counter-mold which is manufactured by the method and system of additive manufacturing of the invention.
Figure 11 This figure shows a view of two graphs corresponding to height measuring process.

### DETAILED DESCRIPTION OF THE INVENTION

As will be appreciated by one skilled in the art, aspects of the present invention may be embodied as a system, method or computer program product.

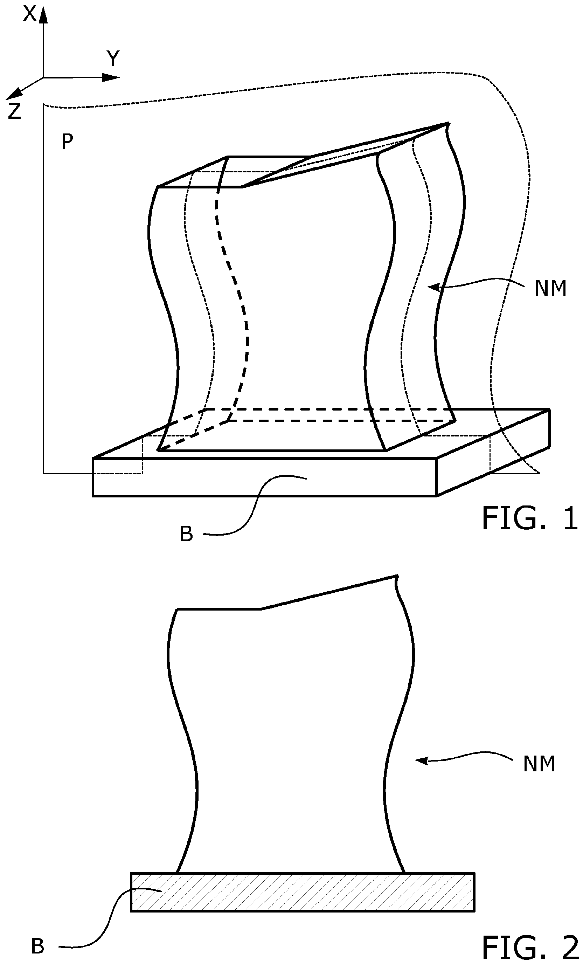

Figure 1 depicts an example of a 3d numerical model, generated by a computer system (CS), wherein the 3d numerical model represents a three-dimensional object, namely a mold, to be manufactured according to the additive manufacturing method proposed by the present invention. In this example, the 3d numerical model, which is implemented in the computer system (CS), also includes a flat base (B) on which the three-dimensional numerical model is supported. Alternatively, the numerical model could have only one plane as a base. The flat base (B) extends along a direction (Y-Y') transverse to a longitudinal direction (X-X') along which the mold (M) to be manufactured will be made to grow by adding layers of material.

In this first example, the 3d numerical model (NM) numerical model (NM) extends along a vertical axis corresponding to the longitudinal direction (X-X') and the gravity direction, which in this case is perpendicular to the direction (Y-Y') of the base (B) and will be horizontal. In this example, the shape of the 3d numerical model (NM) numerical model (NM) is not regular in the longitudinal direction (X-X') and it is regular in the direction (Z-Z'). That is, any cut according to the plane defined by the Y-Y' and X-X' directions are the same when cutting the object, as the one identified as plane "P".

In order to simplify the representation of the steps of the method of the invention, Figure 2 depicts a cross-section of the 3d numerical model of Figure 1 by cutting plane "P" of Figure 1, so a "simplified" two-dimensional numerical model is represented.

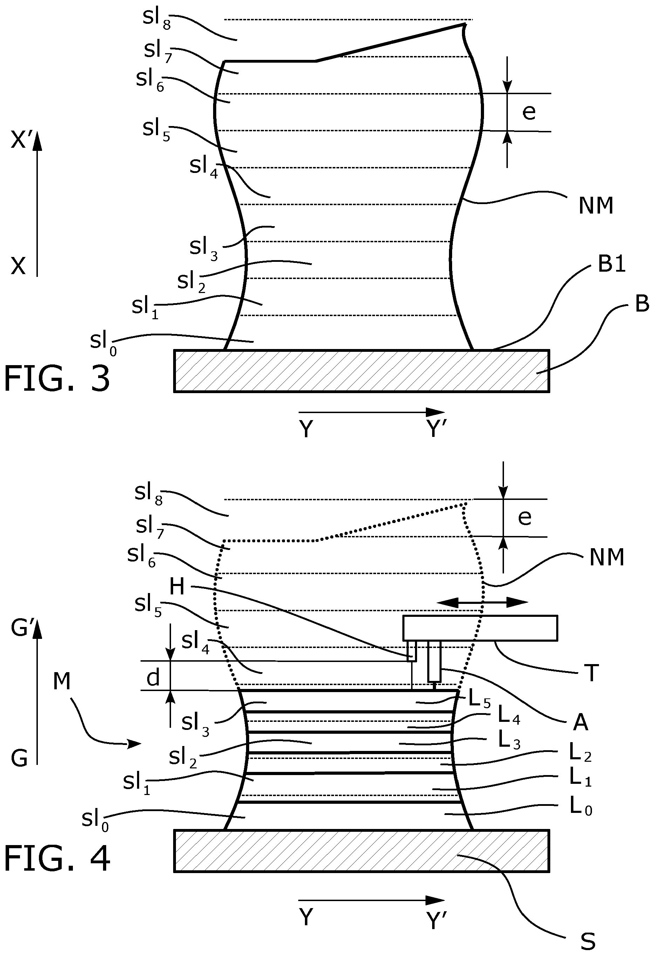

As shown in Figure 3, the "simplified" 2d numerical model of Figure 2 now includes the partitioning/segmenting of the numerical model into a plurality of stacked slices (sl₀, sl₁, sl₂,... sl s), in particular nine different stacked slices, of a predetermined thickness (e) along a predetermined longitudinal direction (X-X'). The first slice that is placed on the upper surface (B1) of the flat base (B) corresponds to slice 0 (sl₀), and the next slice that is placed on top of the upper surface of slice 0 (sl0) corresponds to slice 1 (sl₁), and so on until the last slice 8 (sl₈) is placed on top of the whole numerical model (NM). In this specific example, all nine stacked slices have the same thickness (e) but they have a different shape and width according to the transverse direction (Y-Y').

The manufacturing method uses the model as a reference so that starting from a first slice (sl₀) a first layer is deposited on the substrate in order to fill with material a volume as defined by this slice (sl₀).

The material deposition method is by arc so that once a trajectory is established in the plane parallel to the substrate, a cord of material is deposited. The deposition of material by means of a cord results in a very irregular deposition giving rise to a surface with strong fluctuations in height.

The method also makes use of height measurements, specific ways of taking a single measurement value over an irregular surface will be disclosed, which allow criteria to be applied to determine whether the volume corresponding to a slide (sl) being filled has been completed or even exceeded.

Figure 4 depicts a first real situation of the system of the invention (not in the computer system (CS), wherein the base of the object corresponds to the real substrate (S) on which material of the first layer (L₀) is deposited and also serves for supporting the generated mold (M). The computer system (CS) that is in communication with the wire arc device (A) and the sensor (H) is not represented in the figures.

In this first example of Figure 4, six stacked layers (L₀, L₁, L₂,..., L₅) have been deposited following a growth direction G-G' which is perpendicular to the direction Y-Y' of the substrate (S), so the manufacturing process is at an intermediate stage where more than half of the total of the nine slices are deposited. Furthermore, a cross-section of the numerical model that it is used for guiding the wire arc device (A) is also represented in the same figure 4 over imposed to the body generated by the deposited layers. Continuous and thick lines are those corresponding to the manufactured part of the mold (M) and dashed lines correspond to the over imposed model as a reference.

In this Figure 4, the tool (T) that is used to apply the layers (L) is also represented. Letter "L" is used for all layers or for any layer since index is not relevant. The same applies to other references with indexes.

In this case, the direction G-G' in which the mold (M) grows corresponds to the longitudinal direction X-X'. The tool (T) comprises a wire arc device (A) for depositing metal cord according to a predetermined path (PTH) over a surface in a direction perpendicular to the substrate (S). The wire arc device (A) is configured for being movable in a plane parallel to the substrate (S), see arrows indicating that direction, thus forming a metal layer (L) on top of each other. The means for automatically moving the wire arc device (A) are not represented in the figures.

These means are adapted to move according to a growing direction G-G' to a predetermined distance from the substrate (S) and a height set by the height resulting from the number of slices, and the thickness of each slice, accumulated in the manufacturing process. These means are further adapted to move in a plane parallel to the substrate (S) and according to a specific and predetermined path (PATH). Movements according to the growing direction G-G' are directed to grow one or more new layers (L) trying to fill the thickness of a specific slice (sl). If this aim is not fulfilled for a specified slice (sl) when a new layer is applied then a new layer is added. If the height resulting from a new layer exceeds the height of the accumulated slices (sl) and the next slice (sl) then such next slice (sl) is skipped taking the further next slice (sl) as a reference slice (sl).

Also the tool (T) comprises a sensor (H) that measures the vertical distance (d) between the wire arc device (A) and the current top layer of the mold (M). In particular, Figure 4 shows a situation in which the input of the current last (top) layer (i.e. the layer 5 (L₅)) has not reached the current height of the numerical model slice 4 (Sl₄), so the slide is not changed and a new layer is reapplied on top of the current top layer.

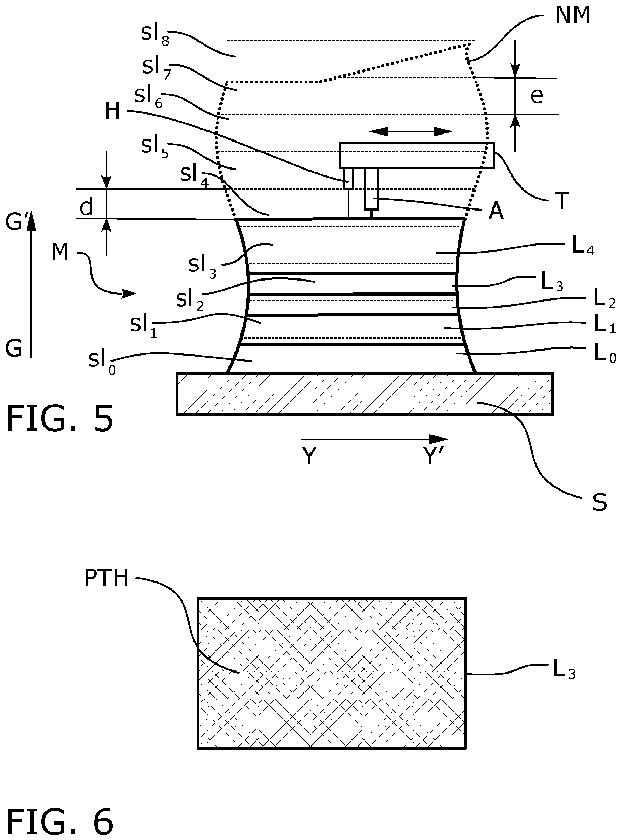

Figure 5 depicts the same view of the system as Figure 4 but in a second different method step wherein five different stacked layers (L₀, L₁, L₂,..., L₄) have been deposited. In this case, the current last (top) layer (i.e. the layer 4 (L₄)) has exceeded the current height of the numerical model slice 3 (Sl₃) and, therefore, one slide is skipped and the next slide 4 (Sl₄) is used as a reference. This criteria is more important than the former one since if the added layer (L) is higher than expected there is risk of contact between the wire are device (A) and the generated part of the mold (M) that would result in a welding of the tool and such generated part.

Both figures 4 and 5 show how the constant thickness (e) of the slices (sl₀ to Sl₈) of the numerical model does not maintain in reality, where the thickness of each deposited layer (L) is different from each other, e.g. the thickness of deposited layer 4 (L4) is substantially higher than the thickness of previous deposited layer 3 (L3).

The example shown in Figure 6 is a top view of the deposited layer 3 (L₃) having a solid rectangular configuration. It can be seen that the metal cord (MC) that forms the layer 3 (L₃) is deposited by the wire arc device (A) following a predetermined path (PTH) generated in the computer system (CS) and transmitted to the wire arc device (A) for each slice (sl) of the plurality of stacked slices of the model (NM). The path (PTH) of one slice (sl) may be different to the path PTH) of other slice (sl).

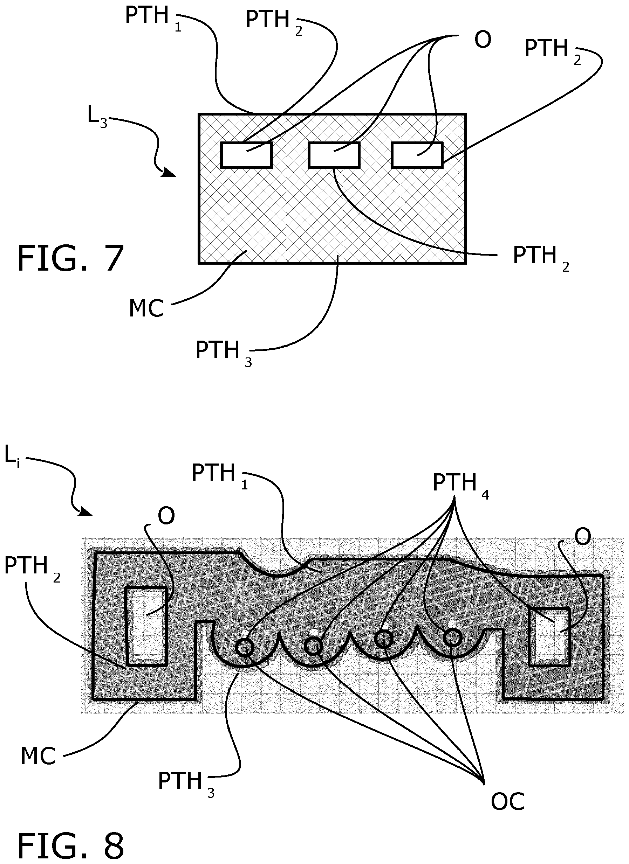

The example shown in Figure 7 is a top view of another deposited layer 3 (L₃), having also a solid rectangular configuration. Unlike Figure 6, the path (PATH) generated in the computer system (CS) and transmitted to the wire arc device (A) when manufacturing layer L₃ of a model (NM) have three separate inner conduits or openings (O) which are crossing the vertical direction. Said inner conduits or openings (O) are provided for reducing the quantity of metal of the mold, so the total weight of the mold. The path (PATH) comprises the following different regions or portions:
- a first portion of path (*PTH*₁) that corresponds to the rectangular perimeter of the layer L₃ determined by the perimeter of the reference slice (sl) of the model (NM) used at that stage of the manufacturing process, in particular the shape of the slice (sl) cut at the height with an horizontal plane located at the height of the layer (L);
- a second portion of path (*PTH*₂) that corresponds to the three inner perimeters of openings (O) sectioned by the same plane; and
- a third portion of path (*PATH*₃) that corresponds to the inner area of the same section.

Figure 8 depicts a top view of a second example of an intermediate layer of a mold (M) which has been manufactured by the method and system of additive manufacturing of an example of the invention. This second example has a solid shape with two lateral through rectangular openings (O) and also four through oil channels (OC) for cooling the mold located at an intermediate position.

The black contour line outlines represent the paths (PATH) generated in the computer system (CS) for this specific layer (Lᵢ). In this case, the path (PATH) generated in the computer system (CS) for this layer (Lᵢ) comprises the following different regions or portions:
- a first portion of path (*PTH*₁) that corresponds to the perimeter of the layer (L);
- a second portion of path (*PTH*₂) that corresponds to one or more inner perimeters of inner openings (O) sectioned by the layer (L);
- a third portion of path (*PATH*₃) that corresponds to the inner area of the layer (L); and
- a forth portion of path (*PATH*₄) that corresponds to the inner perimeters of one or more inner oil channels (OC) sectioned by the layer (Lᵢ).

The metal cord (MC) that forms the stacked layers of the mold is represented in this Figure 8 by an area with intersecting lines forming triangles. Once the mold (M) has been manufactured layer by layer, it can be subsequently machined at the outer surfaces to finally obtain the final mold.

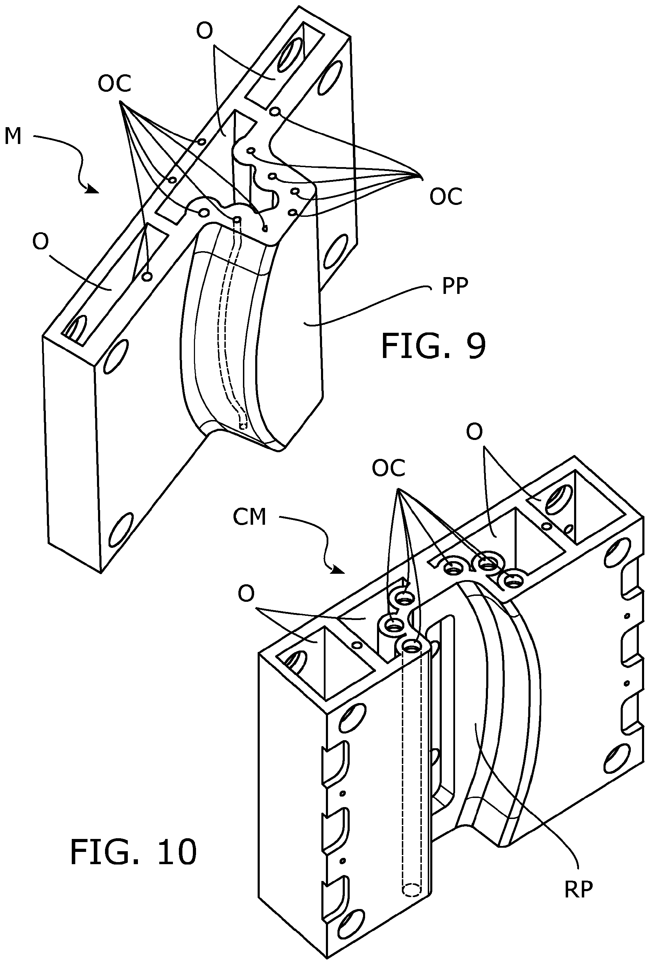

The mold (M) and counter-mold (CM) of Figures 9 and 10 are configured for being used together, wherein the surfaces entering into contact are machined obtaining a high quality surface while the where the mold manufacturing process has required up to 25% - 45% less metal cost than a traditional casting process and a thermal inertia reduction of 38% for the core plate (the mold) and a 40% of thermal inertia reduction for the cavity plate (the counter mold).

Figure 9 depicts a perspective view of a third example of a mold (M) which has been manufactured by the method and system of additive manufacturing of the invention. This third example of a mold (M) comprises a protruding central portion (PP), three through openings (O) and also a plurality of oil channels (OC). The central portion (PP) has a lateral part that is curved and another lateral part that is rectilinear. Some oil channels (OC) of the plurality of oil channels (OC) are located in the interior of the central portion (PP) and (OC) cannot be drilled since they follow the curvature of the protruded central portion (PP).

Figure 10 depicts a perspective view of a forth example of a counter-mold (CM) which has been manufactured by the method and system of additive manufacturing of the invention. This forth example of a mold (M) comprises a recessed central portion (RP), four through openings (O) and also a plurality of oil channels (OC). The oil channels (OC) of the plurality of oil channels (OC) that are located in the peripheral area of the recessed central portion (RP) follow the curvature of said recessed central portion (RP).

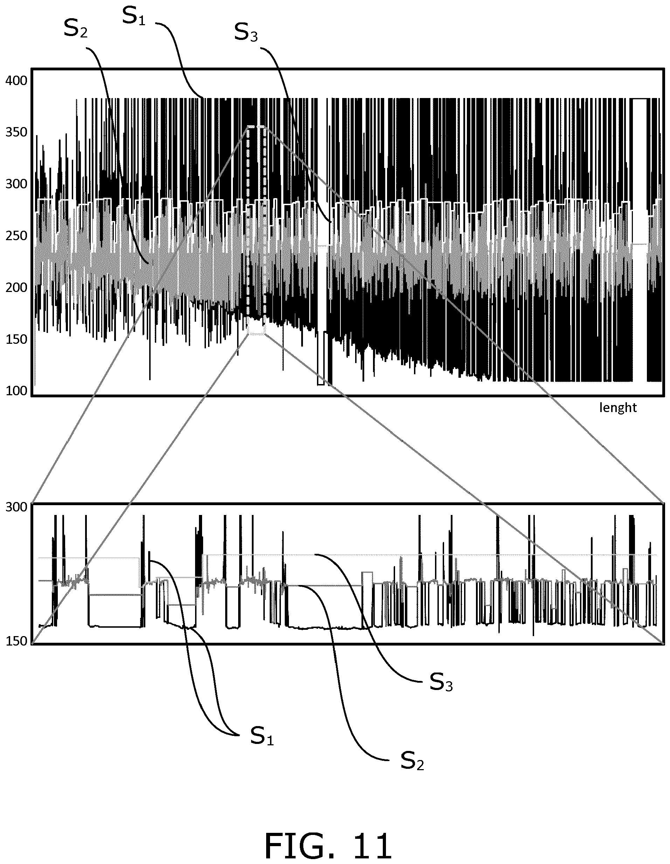

Figure 11 depicts a view of two graphs corresponding to height measuring process performed by the method and system of the present invention. In particular, it shows at the top a graph of measurements captured by the height sensor (H) of the system along a given length of one of the wire arc device (A). The number of measurements retrieved from this sensor (H) is very high per unit length, so a narrow portion of the graph is plotted at the bottom of the figure, expanded to show more clearly the measurements and further signals generated from this first signal.

The black color in the two graphs shows a highly fluctuating signal (S₁) that corresponds to the height data directly obtained by the sensor (H).

The two graphs shown in gray is the value signal (S₂) of a filtered signal where the measurements directly obtained by the sensor (H) has had spurious values and, also values that are not maintained over time for a predetermined time interval are removed. The result is a more stable generated surface height tracking value.

Finally, a third signal (S₃) is shown in a lighter gray in the two graphs, almost white in the upper graph, which are constructed as the maximum values of the previous signal at predetermined length intervals thus identifying the height values to be taken as a reference to prevent the tool (T) from entering into contact with the mold (M), avoiding the welding of the tool (T) with the mold (M).

## Claims

1. Method of additive manufacturing for manufacturing molds or part of molds, by means of:
- a substrate (S) intended for supporting the generated mold (M, CM) or part of said mold;
- a wire arc device (A) adapted for depositing metal cord (MC) according to a predetermined path (PTH) over a surface in a direction perpendicular to the substrate (S) and adapted to be movable in a plane parallel to the substrate (S) forming a metal layer (L) on top of each other;
- a sensor (H) adapted to measure a distance (d) between the wire arc device (A) and a surface in a perpendicular direction to the substrate (S); and
- a computer system (CS) in communication with the wire arc device (A) and the sensor (H);
the method comprising the steps:
1. generating by the computer system (CS) a 3D numerical model (NM) of a mold (M) or part of said mold (M);
2. segmenting by the computer system (CS) the 3D numerical model (NM) into a plurality of stacked slices (*slᵢ, i* = 0,1, ...) of a predetermined thickness (e) according to a predetermined direction (X-X');
3. iteratively, departing from the first slice (*sl*₀) until the last slice (*sl_{N}*) of the 3D numerical model (NM), carrying out on each of the slices (*slᵢ*) by the computer system (CS), according to a sequential order, the following sub-steps:
a) selecting the slice (*slᵢ*) of the 3D numerical model (NM) to be used for determining the path (PTH) of the wire arc device (A) to form a determined metal layer (*Lⱼ*);
b) determining by the computer system (CS), for the determined slice (*slᵢ*)*,* a path (PTH) intended to represent a trajectory of a metal cord (MC) to be deposited in respect to the slice (*slᵢ*); and
c) commanding the wire arc device (A) by the computer system (CS) to form a determined metal layer (*Lⱼ*) by depositing a metal cord (MC) on top of the previously formed metal layer (*L*_{*j-*1}), or on the substrate (S) if it is the first metal layer (*L*₀), following a trajectory according to the path (PTH) generated by the computer system (CS) for the slice (*slᵢ*) to be used;
- wherein in step 3 the computer system (CS) further carries out a further action of checking for the selected slice (*slᵢ*) the formed metal layers (L) in comparison to the slices (sl) of the 3D numerical model (NM), comprising the following sub-steps:
before step c is executed, receiving from the sensor (H) at least one measurement value of the distance (d) and determining a representative value of the height of the formed metal layers (L);
if the representative value is higher than the summation of the thicknesses € of the previous slices (*slₗ*, *l* = 0,1, ..., *i* - 1) of the 3D numerical model plus the thickness € of the selected slice (*slᵢ*) to be used then at least c) of the currently checked slice is not executed and the computer system (CS) selects the next slice (*sl*_{*i*+1}).

2. A method according to claim 1, wherein after receiving from the sensor (H) the measurement of the distance (d) and determining a representative value of the height of the formed metal layers (L), the method further comprises the step:
- before step a), receiving from the sensor (H) a measurement of the distance (d) and determining a representative value of the height of the formed metal layers (L) and, if the representative value of the height is lower than the summation of the thicknesses € of the previously used slices (*slₗ, l* = 0,1, ..., *i* - 1) then steps b) and c) are executed.

3. A method according to any of the preceding claims, wherein the path (PATH), determined by the computer system (CS), generated for at least one slice (sl) of the plurality of stacked slices comprises:
- a first portion of path (*PTH*₁) that corresponds to the perimeter of the slice (sl);
- a second portion of path (*PTH*₂) that corresponds to inner perimeter/s of one or more inner conduits, openings or cavities (O) sectioned by the slice (sl); and
- a third portion of path (*PATH*₃) that corresponds to the inner area of the slice (sl).

4. A method according to the preceding claims wherein the path (PATH), determined by the computer system (CS), generated for at least one slice (sl) of the plurality of stacked slices further comprises:
- a forth portion of path (*PATH*₄) that corresponds to inner perimeter/s of one or more inner cooling ducts or channels (OC) sectioned by the slice (sl).

5. A method according to the preceding claim, wherein two sensor measurements are taken:
- a first measurement at a location corresponding to the inner area of the slice determining a representative value of the height at said location and,
- a second measurement at a location corresponding to a perimeter of the second portion or the third portion or both portions determining a representative value of the height at said location;
wherein the step c) is executed over the second portion, the third portion or both portions if the absolute value of the difference between the representative value of the height of the first measurement and the representative value of the height of the second measurement is higher than a predetermined threshold.

6. A method according to the preceding claim, wherein the generated third portion of path (*PATH*₃) incorporates a tolerance for avoiding the section reduction or closing of any inner conduits or openings (O) with metal cord (MC).

7. A method according to any of the preceding claims, wherein the metal cord (MC) is deposited in a direction of growth (G-G') transversal to the predetermined direction of the path (PATH), preferably in a direction perpendicular to the substrate (S).

8. A method according to any of the preceding claims, wherein determining the representative value of the height from a sensor measurement is being processed by the computer system (CS) by:
- removing measurement spurious values; or
- removing measurements that are not maintained during a predetermined period of time; or
- removing both, measurement spurious values and measurements that are not maintained during a predetermined period of time.

9. A method according to the previous claim, wherein the sensor measurement is being further processed by the computer system (CS) by selecting the higher value of the sensor measurements in an entire metal layer ensuring that the wire arc device (A) does not touch the generated mold (M) or part of said mold (M).

10. A method according to any of the preceding claims, further comprising the step of machining the external surface of the generated mold (M) or part of said mold (M), wherein the machining is preferably milling.

11. A method according to any of the preceding claims, further comprising the step of polishing the external surface of the generated mold (M) or part of said mold (M).

12. An additive manufacturing system for manufacturing molds (M), the system comprising:
- a substrate (S) intended for supporting the generated mold (M) or part of said mold (M);
- a wire arc device (A) adapted for depositing metal cord (MC) according to a predetermined path (PATH) over a surface in a direction perpendicular to the substrate (S) and adapted to be movable in a plane parallel to the substrate (S) forming a metal layer (L) on top of each other;
- a sensor (H) adapted to measure the distance (d) between the wire arc device (A) and a surface in a perpendicular direction to the substrate (S); and
- a computer system (CS) in communication with the wire arc device (A) and the sensor (H);
wherein the computer system (CS) is adapted to carry out the steps 1 to 3 of the method of claim 1.

13. A system according to claim 12, wherein the wire arc device (A) is a DED-arc wire device.

14. A system according to claim 12 or 13, wherein the computer system (CS) is further adapted to carry out the method according to any of claims 2 to 9.

15. A computer program product comprising instructions which, when the program is executed by a computer system (CS), cause the computer system (CS) to carry out the steps 1 to 3 of the method of claim 1 and/or any of the steps of claims 2 to 9.
